# EUROPEAN PATENT APPLICATION

(11) **EP 3 760 404 A1**
(43) Date of publication of application: **06.01.2021**
(21) Application number: 19184219.4
(22) Date of filing: 03.07.2019
(51) Int. Cl.: B28B 1/00, B28B 1/16, B28B 13/02, B28B 19/00, B28B 23/00, B32B 13/04, B32B 13/14, B32B 5/02, B32B 13/06, B32B 15/02

(54) **METHOD FOR MANUFACTURING LAYERED CONCRETE PARTS**

(71) Applicant: HeidelbergCement AG, 69120 Heidelberg (DE)
(72) Inventor: SKOCEK, Jan, 69181 Leimen (DE); ZAJAC, Maciej, 69126 Heidelberg (DE); BEN HAHA, Mohsen, 69117 Heidelberg (DE)
(74) Representative: Zellentin & Partner mbB Patentanwälte

(57) **Abstract**

Method for manufacturing layered concrete parts (1), comprising
a) providing a first kind of concrete and a second kind of concrete differing from the first kind of concrete in at least one property,
b) casting a first layer (2,6) of the layered concrete part (1) with the first kind of concrete,
c) applying a web (3,5) on the surface of the fresh cast concrete layer (2,6),
d) casting a second layer (4) from the second kind of concrete, and
e) repeating the step c) and b) or d), respectively, until a predetermined, desired number of layers have been cast and form the layered concrete part (1), as well as layered concrete parts (1) obtained and use of a web for prevention of mixing of fresh, not set concrete during manufacturing layered concrete parts (1) from at least two different kinds of concrete.

## Description

The present invention relates to a method for manufacturing layered concrete parts, to concrete parts obtained therewith, and to a use of a web for prevention of mixing of fresh, not set concrete during manufacturing layered concrete parts from at least two different kinds of concrete.

Concrete is one of the most important building materials, if not the most important. Typical construction methods with concrete are erecting of formwork on site and filling them with ready mix concrete or concrete mixed on site on the one hand and precast concrete elements on the other. Precast concrete elements have the big advantage to need no time for hardening after placing them at the construction site. Furthermore, their properties can be very precisely adjusted by manufacturing in a factory under controlled conditions and with exact component mixes.

Since a few years it has also been tried to provide precast concrete elements with gradient composition and properties, see e.g. Herrmann et al., "Fertigteile aus funktional gradiertem Beton", BetonWerk International 6 (2013) page 64-68. Since concrete structures usually need different mechanical properties in different areas thereof, concrete can be saved and weight reduced by using less dense and strong concrete for areas that do not contribute to load bearing and other mechanical requirements. Often, an improved thermal insulation constitutes an additional advantage of less dense concrete.

A not completely solved problem is posed by manufacturing such concrete parts. One method is spraying the layers on site, but equipment for this is complicated and costly. For precast elements it was proposed to place the different concrete types one after the other. But this means a lot of time is needed for waiting with pouring the next layer until the concrete of the previous layer has set, because when the second concrete type is placed too early it mixes with the first type. For example, when the first layer of the concrete is characterized by a lower density than that of the second layer, supposed to be on the first layer, mixing of the concretes may occur when concreting continuously. For this reason, it is usually necessary to wait for the first layer of concrete to set and gain first compressive strength. This is particularly important when the outlet of the concrete mixer / container is high as compared to the frame work / concrete layer. This results in the delay and complication of the overall production process of the precast elements. Thus, the object remains to find more efficient methods of manufacturing concrete parts with layers from concrete having different density or other differing properties.

Surprisingly it was now found that this problem can be solved by separating the concrete layers with a web from netting or any other flat material with sufficient open area laid on top of each layer from a concrete with different property. It seems that the main contributor to the difference in the concrete density is coming from the different aggregates used for the concrete production. The density of the paste in the several types of the concretes is similar. Consequently, the solution of the problem is provided by a method for manufacturing layered concrete parts, comprising
a) providing a first kind of concrete and a second kind of concrete differing from the first kind of concrete in at least one property,
b) casting a first layer of the layered concrete part with the first kind of concrete,
c) applying a web on the surface of the fresh cast concrete layer,
d) casting a second layer from the second kind of concrete, and
e) repeating steps c) and b) or d) until a predetermined, desired number of layers have been cast and form the layered concrete part.

The main advantages of such approach are:
- Easy technology
- Acceleration of the production process
- Additional reinforcement of the concrete

The web is preferably a net, but can also be any other kind of flat material with sufficient open area, e.g. a fabric, roving, knit fabric. The material of the web has to be compatible with the concrete, i.e. it is not attacked by the usually high pH value. Suitable materials are for example steel, glass (especially alkali resistant glass), polymers, natural fibers, carbon fibers, mineral fibers or cement fibers. Additional parameters to consider when choosing the web material and shape are a possible reinforcement functionality and a bonding effect between the adjacent concrete layers. However, the main bonding effect is provided by the direct contact of both layers through the openings in the web.

The openings have such sizes that the aggregates of specific size depending on the application cannot migrate through the net. Thus, usually the maximum area of one opening is between 30 and 95 % of the D₉₀ aggregate size determined by sieve analysis or other suitable technique. Consequently the specific size of the openings is chosen depending on the specific size of the aggregates, the difference in density of the two layers bonded, grading of the concretes and their viscosities.

To ensure mechanical stability and at the same time sufficient contact area of the different kind of concrete through the web, a compromise has to be found for the total area of the openings. Typically, the total area of the openings in the web ranges from 10 to 99.9 % of the total web area, preferably from 50 to 99.5 % and most preferred from 60 to 99 %.

The mechanical performance of the web is chosen depending on the application procedure. Any web that can support itself and survive the application on the first layer is suitable. In this respect, the fiber thickness and material strength is adapted so the web is not made stronger than needed, to save material, cost and resources

In one preferred embodiment the web additionally provides reinforcement to the concrete part to enhance mechanical performance of the concrete elements Therefore, material, thickness and open area are chosen according to the common design procedures of web and fiber reinforced concrete members.

The first and second kind of concrete can be based on a cement or binder known as such and usually contain at least cement (binder), aggregate and water. The most common and also preferred cements are Portland cement (OPC) and composite cements comprising Portland clinker, limestone, calcined clays, slags (e.g. granulated blast furnace slag), fly ash, and other suitable supplementary cementitious materials.

It is possible to use any hydraulic cement or binder. Thus, calcium sulfoaluminate cements (C$A) or calcium aluminate cements can be used. Here, also, the common types are suitable, e.g. C$A comprising ye'elimite, belite, ferrite and optionally also ternesite. Composite cements are sometimes designated binder herein, wherein the binder comprises all strength generating components, e.g. OPC and pozzolan in the case of a pozzolan cement. Also geopolymer binders are possible. In general different cements/binder scan be used for the different kinds of concrete, wherein the cements/binders need to be compatible to produce the layered concrete.

In one embodiment, carbonation hardening cement/binders, or such relying on a combination of hydraulic and carbonation hardening, are used. Therein, special hollow perforated webs (e.g. nets) can be used for the hardening via carbonation. These can (1) separate the different layers of the concrete (made from the same or different cements/binders) and (2) allow the diffusion of CO₂ through the hollow capillaries.

The property differing between the first and second kind of concrete is preferably the density. Typically, this is accomplished by using different aggregate and/or different amounts of aggregate. To this end, sand and gravel aggregate can be exchanged partly or totally by light weight aggregate of the same size/size distribution and/or an air entraining agent is used to increase porosity. Porosity can also be increased by reducing the total amount of cement and/or increasing the water/cement or water/binder ratio.

Another possible different property is the viscosity. The method according to the invention can be used for casting of more viscous concrete into a layer of less viscous concrete avoiding their intermixing. Different viscosities are often needed to facilitate achieving different requirements on different layers. A dense closed-structure is often preferred for the outermost layer from aesthetic or functional reasons such as durability or maintenance/cleaning possibility. The internal layers often serve as insulation layers and open structure might be preferred. The concretes fulfilling these respective requirements are typically of different viscosities and cohesions.

According to the invention at least two kinds of concrete are provided with appropriate composition to achieve the predetermined properties in step a). Typically, a first kind of concrete is designed to provide hardened concrete with the necessary strength, porosity and other properties. For this, the known admixtures and additives can be used in their known amounts. For example plasticizers, air entraining agents, viscosity modificators, and other additives known from the concrete technology in amounts of 0.01 to 10 % by weight with respect to the cement. The second kind of cement is typically adapted to save weight and costly materials, i.e. the second hardened concrete can have lower strength due to containing less cement and/or have a lower density due to aggregate with less density and/or a higher porosity. Thus, the composition differs from that of the first kind of concrete, although it comprises cement, aggregate, water and possibly known admixtures and or additives in their usual amount, too.

It is of course possible to use more than two kinds of concrete, e.g. providing a third, fourth, fifth, ... kind of concrete with yet different properties and/or use mixtures with differing amounts of the first and second kind of concrete as third, fourth, fifth, ... kind of concrete. There is no principal limit of the number of different concretes, although in practice the most common situation is two different kinds of concrete.

In step b) the first layer is cast from the first kind of concrete in a suitable formwork or mould defining the form of the layered concrete part. In case the first layer shall not extend over the whole area partitions are inserted into the form or erected inside the formwork before casting the concrete. The cut-off areas are filled simultaneously or subsequently with the desired other kind of concrete. The mould can be vibrated to compact the cast concrete. The cast concrete can be let to compact on its own. Any common compaction techniques such as manual tapering or poke vibrator are also suitable.

The next step c) follows immediately and consists of placing a web over the surface of the cast concrete. In case the first layer is non-uniform the partitions are removed before placing the web, and reinserted on top of it if applicable.

It is now possible to cast the second kind of concrete without any further delay, i.e. there is no time needed to allow setting and/or preliminary hardening of the previous layer. The placed web prevents mixing of the concrete kinds, enabling to carry out step d) directly after steps b) and c).

If further layers are foreseen, normally at least a third layer from the first kind of concrete is desired, these can be cast by repeating the steps, i.e. another web is placed on top of the layer from the second kind of concrete and another layer of concrete is cast from the first kind of concrete (or from a third kind of concrete or a mixture of the first and second kind of concrete). Thereby, the final layered concrete part is obtained with the predetermined form and number of layers with their differing properties. Depending on whether a formwork or a mould has been used the final part is then obtained by removing the formwork or by lifting the precast element out of the mould.

It is also possible to insert all webs into the mould/formwork and cast all layers of concrete at once in parallel to the webs. In this embodiment it is desirable to cast the different kinds of concrete with approximately the same rate, so that the webs are not deformed. This could happen when one concrete is already cast to a higher level than a neighbouring one and the web is flexible and/or not thoroughly fastened to the mould/formwork. It is immediately apparent that this embodiment allows even more time saving while use of the web according to the invnetion safely prevents undesired mixing of the different kinds of concrete.

The invention will be illustrated further with reference to the attached figures, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approx.", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

In the figures:
Figure 1 schematically shows a first embodiment of a layered concrete part according to the invention;
Figure 2 schematically shows a second embodiment of a layered concrete part according to the invention; and
Figure 3 schematically shows a third embodiment of a layered concrete part according to the invention.

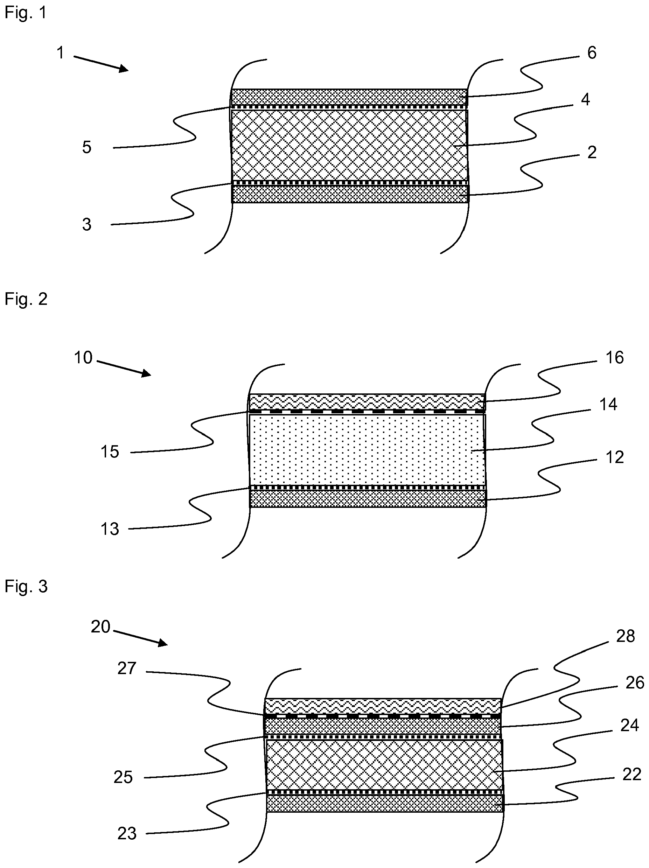

In figure 1 a part of three layered concrete part 1 manufactured according to the invention is shown schematically. The lowest and uppermost layers 2 and 6 are made from a dense concrete, having e.g. a density of 1.8 to 2.5 kg/dm³, and layer 4 is made from a light weight concrete, having e.g. a density from 0.3 to 1.0 kg/dm³. Between layers 2 and 4 and between layers 4 and 6 there are webs 3 and 5, for example from glass fiber or plastic netting with an open area of 80 % and an opening size of 95 % of the D₉₀ of the aggregate in the concretes of layers 2, 4, and 6. The part has two load bearing layers 2 and 6 and an isolating layer 4 in which the aggregate is light weight, e.g. perlite or styrene particles, to provide thermal insulation.

Figure 2 shows a part 10 from also having three layers of concrete separated by two webs. Here the concrete of layer 12 has a high strength, the concrete of layer 14 has a high porosity to improve thermal insulation and the concrete of layer 16 has a low viscosity to provide a smooth surface. To ensure proper layering, the web 15 has a lower opening size, preventing the aggregate from the low viscosity concrete in layer 16 from migrating into the high porosity layer 14. The web 13 between layers 12 and 14 can have larger opening size.

Figure 3 shows a part 20 with four layers of concrete separated by three webs. The first layer 22 and third layer 26 are from the same high strength concrete, the second layer 24 is from a concrete with lightweight aggregate or foamed concrete to provide thermal insulation and the fourth layer 28 is from low viscosity concrete to provide a smooth and durable surface. Analogously to webs 3, 5, and 13 the webs 23 and 25 have a bigger opening size than web 27 between layers 26 and 28. The application of the webs enables that part 20 can be cast in any directions - layer 28 can be cast first followed by layers 26, 24 and 22 or 22 can be cast first followed by 24, 26 and 28. Alternatively, the whole element can be cast at once with casting direction parallel to the planes of the webs.

## Claims

1. Method for manufacturing layered concrete parts, comprising
a) providing a first kind of concrete and a second kind of concrete differing from the first kind of concrete in at least one property,
b) casting a first layer of the layered concrete part with the first kind of concrete,
c) applying a web on the surface of the fresh cast concrete layer,
d) casting a second layer from the second kind of concrete, and
e) repeating the step c) and b) or d), respectively, until a predetermined, desired number of layers have been cast and form the layered concrete part.

2. Method according to claim 1, wherein the differing property is the density.

3. Method according to claim 2, wherein a different density of the first and second kind of concrete is provided by one or more of
- using aggregate of different density
- reducing the amount of cement
- adding porosity increasing admixtures and/or additives.

4. Method according to anyone of claims 1 to 3, wherein a net, fabric, roving, or knit fabric is used as the web.

5. Method according to anyone of claims 1 to 4, wherein a web with an open area of 10 to 99.9 % of the total web area, preferably from 50 to 99.5 % and most preferred from 60 to 99 %. is used as the web.

6. Method according to anyone of claims 1 to 5, wherein a web with openings having a maximum size of 95 % of the D₉₀ of the aggregate in the concretes is used as the web.

7. Method according to anyone of claims 1 to 6, wherein a web from steel, glass or polymer is used as the web.

8. Method according to anyone of claims 1 to 7, wherein a third kind of concrete is provided and a layer from the third kind of concrete is cast on an applied web.

9. Method according to claim 8, wherein the third kind of concrete is a mixture of the first and second kind of concrete, preferably in a weight ratio from 1:5 to 5:1.

10. Layered concrete part comprising layers of at least two different kinds of concrete with webs between adjacent layers obtained by a method according to anyone of claims 1 to 9.

11. Layered concrete part according to claim 10, wherein the web is a net, fabric, roving, or knit fabric made from steel, glass and/or polymer.

12. Layered concrete part according to claim 10 or 11, wherein the concrete contains Portland cement or Portland composite cement.

13. Layered concrete part according to claim 10 or 11, wherein the web has capillaries and one or both of the concretes harden at least partially via carbonation.

14. Use of a web for prevention of mixing of fresh, not set concrete during manufacturing layered concrete parts from at least two different kinds of concrete, wherein the web has an open area of from 10 to 99.9 %, preferably from 50 to 99.5 % and most preferred from 60 to 99 %, of the web surface, and a maximum opening size of 95 % of the D₉₀ of the aggregate in the concretes.

15. Use according to claim 14, wherein the web is a net, fabric, roving, or knit fabric made from steel, glass and/or polymer.
